# EUROPEAN PATENT APPLICATION

(11) **EP 2 908 212 A2**
(43) Date of publication of application: **19.08.2015**
(21) Application number: 13790051.0
(22) Date of filing: 10.07.2013
(51) Int. Cl.: G06F 3/00

(54) **ELECTRONIC MAP TOUCH METHOD AND DEVICE**

(30) Priority: 11.10.2012 CN 201210384211
(71) Applicant: ZTE Corporation, Shenzhen, Guangdong 518057 (CN)
(72) Inventor: WU, Yan, Shenzhen Guangdong 518057 (CN)
(74) Representative: Wilson Gunn
(86) International application number: PCT/CN2013/079146
(87) International publication number: WO 2013/170815

(57) **Abstract**

Disclosed are a touch control method and device for an electronic map, and the method includes: an instruction for selecting a target area of an electronic map displayed on a display screen is received; and an operation corresponding to a received gesture touch-control instruction is performed on a selected target area. By means of the present disclosure, it is possible to reduce touch-control operations of a user, save user's time and facilitate usage of the electronic map.

## Description

### TECHNICAL FIELD

The present disclosure relates to touch control techniques, and in particular to a touch control method and device for an electronic map.

### BACKGROUD

At present, an electronic map displayed on a display screen is generally magnified or de-magnified according to a scale, and the display screen may be a touch screen having a touch control functionality so that an touch control operation can be directly performed on the touch screen; in practical applications, the touch control operation may also be performed on a device (e.g., touch pad) external to the display screen. If a location to be queried is located in an edge area of the display screen, when the map is magnified, the location to be queried will be beyond the display screen. In this case, a user needs to either adjust the location to be queried to a central area of the display screen before the map is magnified, or adjust the location to be queried so that it is within the display screen after the map is magnified. During a continuous magnification, the location to be queried may be desired to be adjusted several times, this not only wastes user's time but also does not facilitate usage of the electronic map.

When the map is de-magnified, it is possible that the location to be queried is too small to see due to excessive de-magnification. In this case, the user needs to magnify the map once again. In order to obtain preferable display effect, multiple times of zoom in and zoom out operations may be needed, this not only wastes user's time but also does not facilitate usage of the electronic map.

When a user needs to modify a navigation route during a navigation using an electronic map, the user is generally required to input an address into an input box or drag and drop a coordinate in the map, so as to determine a place to be bypassed or driven through. However, address inputting or coordinate dragging and dropping are cumbersome and error-prone, thus resulting in repeated operations; in addition, when the user is rather unfamiliar with a target address, the user may have no idea of the name or coordinate of the place to be bypassed or driven through, so he/she can only determine the name or the coordinate after repeated queries, this not only wastes user's time but also does not facilitate usage of the electronic map.

### SUMMARY

In view of the above, the embodiment of the present disclosure is intended to provide a touch control method and device for an electronic map, which can reduce touch-control operations of a user, save user's time and facilitate usage of the electronic map.

To this end, the technical solutions of embodiments of the present disclosure are implemented as follows.

An embodiment of the present disclosure provides a touch control method for an electronic map, and the method includes:
an instruction for selecting a target area of an electronic map displayed on a display screen is received; and
an operation corresponding to a received gesture touch-control instruction is performed on a selected target area.

In an embodiment, the step that an operation corresponding to a received gesture touch-control instruction is performed on a selected target area may include:
when the received gesture touch-control instruction is zoom in, the electronic map is magnified by taking the selected target area as a center of the display screen; and
when the received gesture touch-control instruction is zoom out, the electronic map is de-magnified using a ratio between an average diameter of the selected target area and a length or width of the display screen as a scaling down ratio.

In an embodiment, the step that an operation corresponding to a received gesture touch-control instruction is performed on a selected target area may include:
when the received gesture touch-control instruction is zoom in, the electronic map is magnified by taking the selected target area as a center of the display screen; and
when the received gesture touch-control instruction is zoom out, original content displayed on the touch screen is displayed within the selected target area.

In an embodiment, the gesture touch-control instruction may be a selection made clockwise or counter clockwise.

In an embodiment, the step that an operation corresponding to a received gesture touch-control instruction is performed on a selected target area may include:
when the received gesture touch-control instruction is dragging the selected target area to a pop-up check box, a navigation route is modified according to content of the pop-up check box and the selected target area.

An embodiment of the present disclosure provides a touch control method for an electronic map, and the method includes:
an instruction for selecting a target area of an electronic map displayed on a display screen is received; and
a zoom in or zoom out operation is performed on a selected target area according to a direction of the selection.

In an embodiment, the step that a zoom in or zoom out operation is performed on a selected target area according to a direction of the selection may include:
when the direction of the selection is clockwise, the electronic map is magnified by taking the selected target area as a center of the display screen; and
when the direction of the selection is counter clockwise, the electronic map is de-magnified using a ratio between an average diameter of the selected target area and a length or width of the display screen as a scaling down ratio.

In an embodiment, the step that a zoom in or zoom out operation is performed on a selected target area according to a direction of the selection may include:
when the direction of the selection is clockwise, the electronic map is magnified by taking the selected target area as a center of the display screen; and
when the direction of the selection is counter clockwise, original content displayed on the touch screen is displayed within the selected target area.

An embodiment of the present disclosure provides a touch control device for an electronic map, and the device includes:
a selection instruction reception unit configured to receive an instruction for selecting a target area of an electronic map displayed on a display screen; and
an operation execution unit configured to perform an operation corresponding to a received gesture touch-control instruction on a selected target area.

In an embodiment, the operation execution unit may be configured to: when the received gesture touch-control instruction is zoom in, magnify the electronic map by taking the selected target area as a center of the display screen; and when the received gesture touch-control instruction is zoom out, de-magnify the electronic map using a ratio between an average diameter of the selected target area and a length or width of the display screen as a scaling down ratio.

In an embodiment, the operation execution unit may be configured to: when the received gesture touch-control instruction is zoom in, magnify the electronic map by taking the selected target area as a center of the display screen; and when the received gesture touch-control instruction is zoom out, display original content displayed on the touch screen within the selected target area.

In an embodiment, the operation execution unit may be configured to, when the received gesture touch-control instruction is dragging the selected target area to a pop-up check box, modify a navigation route according to content of the pop-up check box and the selected target area.

An embodiment of the present disclosure provides a touch control device for an electronic map, and the device includes:
a selection instruction reception unit configured to receive an instruction for selecting a target area of an electronic map displayed on a display screen; and
an operation processing unit configured to perform a zoom in or zoom out operation on a selected target area according to a direction of the selection.

In an embodiment, the operation execution unit may be configured to: when the direction of the selection is clockwise, magnify the electronic map by taking the selected target area as a center of the display screen; and
when the direction of the selection is counter clockwise, de-magnify the electronic map using a ratio between an average diameter of the selected target area and a length or width of the display screen as a scaling down ratio.

In an embodiment, the operation execution unit may be configured to: when the direction of the selection is clockwise, magnify the electronic map by taking the selected target area as a center of the display screen; and
when the direction of the selection is counter clockwise, display original content displayed on the touch screen within the selected target area.

It can be learned from above that the technical solution according to embodiments of the present disclosure includes: an instruction for selecting a target area of an electronic map displayed on a display screen is received; an operation corresponding to a received gesture touch-control instruction is performed on a selected target area; when the received gesture touch-control instruction is zoom in, the electronic map is magnified by taking the selected target area as a center of the display screen, thereby avoiding cases that a location to be queried is beyond the display screen; when the received gesture touch-control instruction is zoom out, the electronic map is de-magnified using a ratio between an average diameter of the selected target area and a length or width of the display screen as a scaling down ratio, thereby avoiding cases that a location to be queried on the electronic map is too small to see due to excessive de-magnification; when the received gesture touch-control instruction is dragging the selected target area to a pop-up check box, a navigation route is modified according to content of the pop-up check box and the selected target area, thereby avoiding operations such as address input or coordinate dragging and dropping; in this way, the embodiments of the present disclosure can reduce touch-control operations of a user, save user's time and facilitate usage of the electronic map.

### BRIEF DESCRIPTION OF THE DRAWINGS

Fig. 1 is a flow chart of a first embodiment of a touch control method for an electronic map provided by the present disclosure;
Fig. 2 is a schematic structural diagram of an embodiment of a touch control device for an electronic map provided by the present disclosure;
Fig. 3 is a flow chart of a first embodiment of another touch control method for an electronic map provided by the present disclosure;
Figs. 4A, 4B and 4C are schematic diagrams showing implementation of a second embodiment of a touch control method for an electronic map provided by the present disclosure;
Figs. 5A, 5B and 5C are schematic diagrams showing implementation of a third embodiment of a touch control method for an electronic map provided by the present disclosure;
Figs. 6A, 6B and 6C are schematic diagrams showing implementation of a fourth embodiment of a touch control method for an electronic map provided by the present disclosure;
Figs. 7A, 7B and 7C and Figs. 8A, 8B and 8C are schematic diagrams showing implementation of a fifth embodiment of a touch control method for an electronic map provided by the present disclosure;
Figs. 9A and 9B are schematic diagrams showing implementation of a second embodiment of another touch control method for an electronic map provided by the present disclosure; and
Figs. 10A and 10B are schematic diagrams showing implementation of a third embodiment of another touch control method for an electronic map provided by the present disclosure.

### DETAILED DESCRIPTION

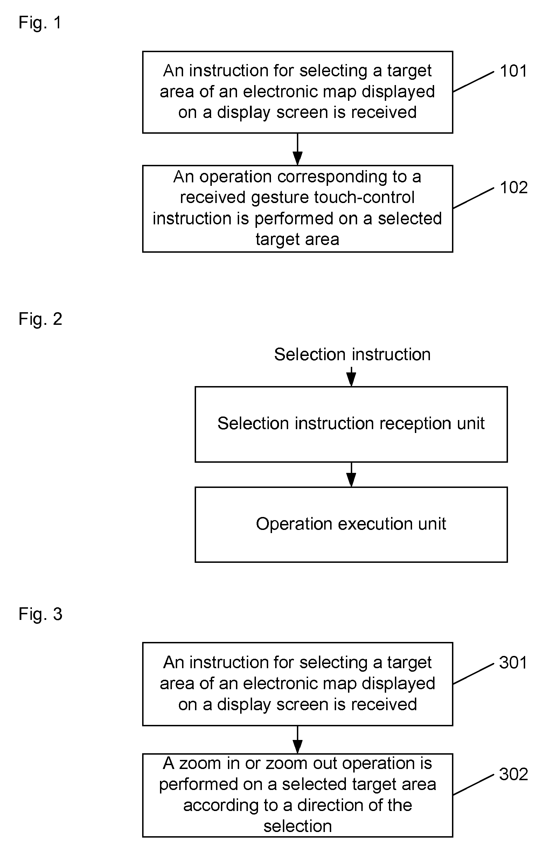

A first embodiment of a touch control method for an electronic map provided by the present disclosure is as shown in Fig. 1, and the method includes:
step 101, an instruction for selecting a target area of an electronic map displayed on a display screen is received; and
step 102, an operation corresponding to a received gesture touch-control instruction is performed on a selected target area.

Preferably, the step that an operation corresponding to a received gesture touch-control instruction is performed on a selected target area may include: when the received gesture touch-control instruction is zoom in, the electronic map is magnified by taking the selected target area as a center of the display screen. In an embodiment, the gesture touch-control instruction is a selection made clockwise or counter clockwise.

Preferably, the step that an operation corresponding to a received gesture touch-control instruction is performed on a selected target area may include: when the received gesture touch-control instruction is zoom out, the electronic map is de-magnified using a ratio between an average diameter of the selected target area and a length or width of the display screen as a scaling down ratio, or original content displayed on the touch screen is displayed within the selected target area. In an embodiment, the gesture touch-control instruction is a selection made counter clockwise or clockwise.

Preferably, the step that an operation corresponding to a received gesture touch-control instruction is performed on a selected target area may include: when the received gesture touch-control instruction is dragging the selected target area to a pop-up check box, a navigation route is modified according to content of the pop-up check box and the selected target area.

An embodiment of a touch control device for an electronic map provided by the present disclosure is as shown in Fig. 2, and the device includes:
a selection instruction reception unit configured to receive an instruction for selecting a target area of an electronic map displayed on a display screen;
an operation execution unit configured to perform an operation corresponding to a received gesture touch-control instruction on a selected target area.

Preferably the operation execution unit may be configured to, when the received gesture touch-control instruction is zoom in, magnify the electronic map by taking the selected target area as a center of the display screen. In an embodiment, the gesture touch-control instruction is a selection made clockwise or counter clockwise.

Preferably, the operation execution unit may be configured to, when the received gesture touch-control instruction is zoom out, de-magnify the electronic map using a ratio between an average diameter of the selected target area and a length or width of the display screen as a scaling down ratio, or display original content displayed on the touch screen within the selected target area. In an embodiment, the gesture touch-control instruction is a selection made counter clockwise or clockwise.

Preferably, the operation execution unit may be configured to, when the received gesture touch-control instruction is dragging the selected target area to a pop-up check box, modify a navigation route according to content of the pop-up check box and the selected target area.

A first embodiment of a touch control method for an electronic map provided by the present disclosure is as shown in Fig. 3, and the method includes:
step 301, an instruction for selecting a target area of an electronic map displayed on a display screen is received; and
step 302, a zoom in or zoom out operation is performed on a selected target area according to a direction of the selection.

Preferably, the step that a zoom in or zoom out operation is performed on a selected target area according to a direction of the selection may include:
when the direction of the selection is clockwise, the electronic map is magnified by taking the selected target area as a center of the display screen; and
when the direction of the selection is counter clockwise, the electronic map is de-magnified using a ratio between an average diameter of the selected target area and a length or width of the display screen as a scaling down ratio, or original content displayed on the touch screen is displayed within the selected target area.

The present disclosure provides an embodiment of another touch control device for an electronic map, and the device includes:
a selection instruction reception unit configured to receive an instruction for selecting a target area of an electronic map displayed on a display screen;
an operation processing unit configured to perform a zoom in or zoom out operation on a selected target area according to a direction of the selection.

Preferably, the operation processing unit is configured to: when the direction of the selection is clockwise, magnify the electronic map by taking the selected target area as a center of the display screen; when the direction of the selection is counter clockwise, de-magnify the electronic map using a ratio between an average diameter of the selected target area and a length or width of the display screen as a scaling down ratio, or display original content displayed on the touch screen within the selected target area.

The above touch control device for an electronic map provided by embodiments of the present disclosure can be applied to electronic products having a display screen, such as a mobile phone or a tablet computer.

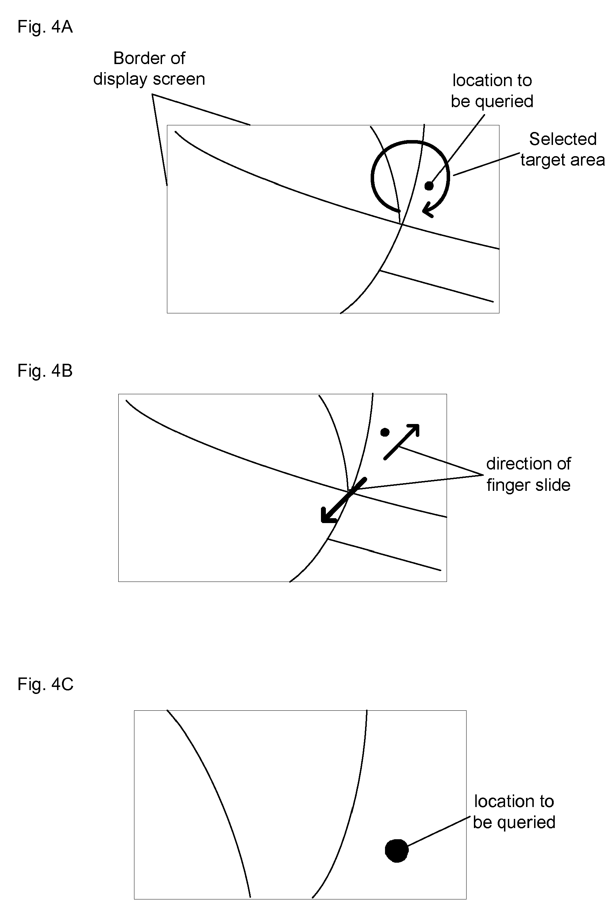

A second embodiment of a touch control method for an electronic map provided by the present disclosure is as shown in Figs. 4A, 4B and 4C, and the method includes:
step 401, an instruction for selecting a target area of an electronic map displayed on a display screen is received. The selection of the target area is as shown in Fig. 4A.
Step 402, a gesture touch-control instruction is received that is a slide of two fingers on the surface of the display screen from the inside out. The slide of two fingers is schematically shown in Fig. 4B.
Step 403, the electronic map is magnified based on the received gesture touch-control instruction by taking the selected target area as a center of the display screen. The effect after magnification is as shown in Fig. 4C.

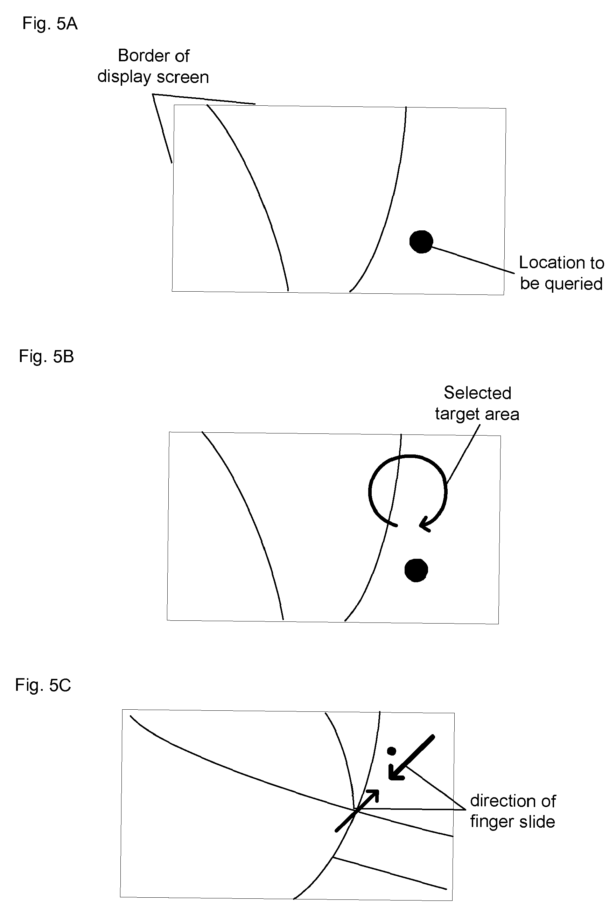

A third embodiment of a touch control method for an electronic map provided by the present disclosure is as shown in Figs. 5A, 5B and 5C, and the method includes:
step 501, an instruction for selecting a target area of an electronic map displayed on a display screen is received. A location to be queried on the electronic map is as shown in Fig. 5A, and the selection of the target area is as shown in Fig. 5B.
Step 502, a gesture touch-control instruction is received that is a slide of two fingers on the surface of the display screen from the outside in.
Step 503, the electronic map is de-magnified based on the received gesture touch-control instruction using a ratio between an average diameter of the selected target area and a length or width of the display screen as a scaling down ratio.

For example, the average diameter of the selected target area is 3 cm and the height of the display screen is 6 cm, then the scaling down ratio is 1/2. The illustration of the slide of two fingers and the effect after magnification are as shown in Fig. 5C.

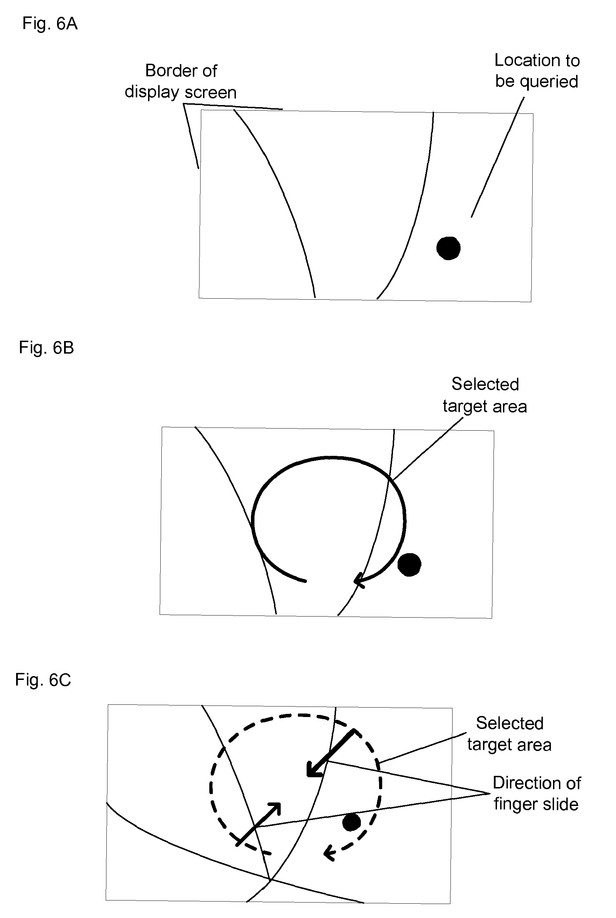

A fourth embodiment of a touch control method for an electronic map provided by the present disclosure is as shown in Figs. 6A, 6B and 6C, and the method includes:
step 601, an instruction for selecting a target area of an electronic map displayed on a display screen is received. A location to be queried on the electronic map is as shown in Fig. 6A, and the selection of the target area is as shown in Fig. 6B.
Step 602, a gesture touch-control instruction is received that is a slide of two fingers on the surface of the display screen from the outside in.
Step 603, original content displayed on the touch screen is displayed within the selected target area based on the received gesture touch-control instruction. The illustration of the slide of two fingers and the effect of displaying the original content displayed on the touch screen within the selected target area are as shown in Fig. 6C.

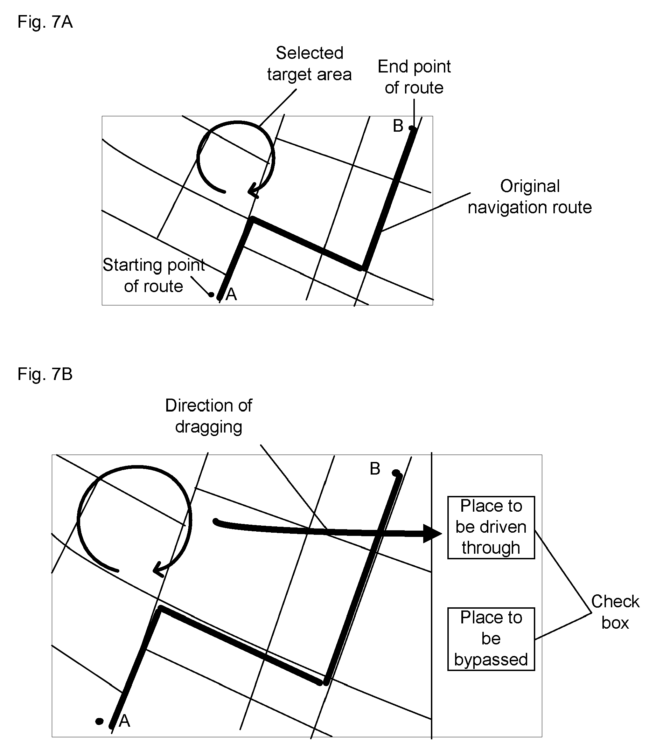

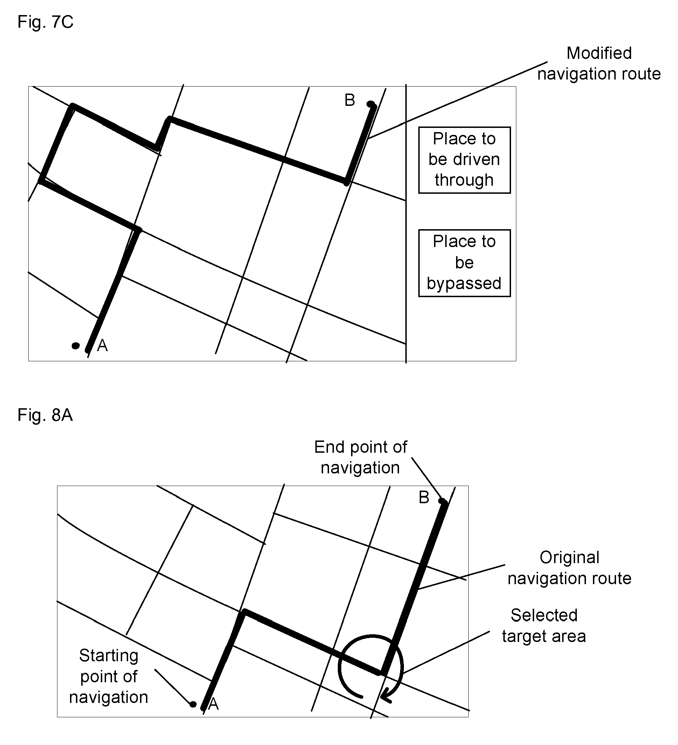

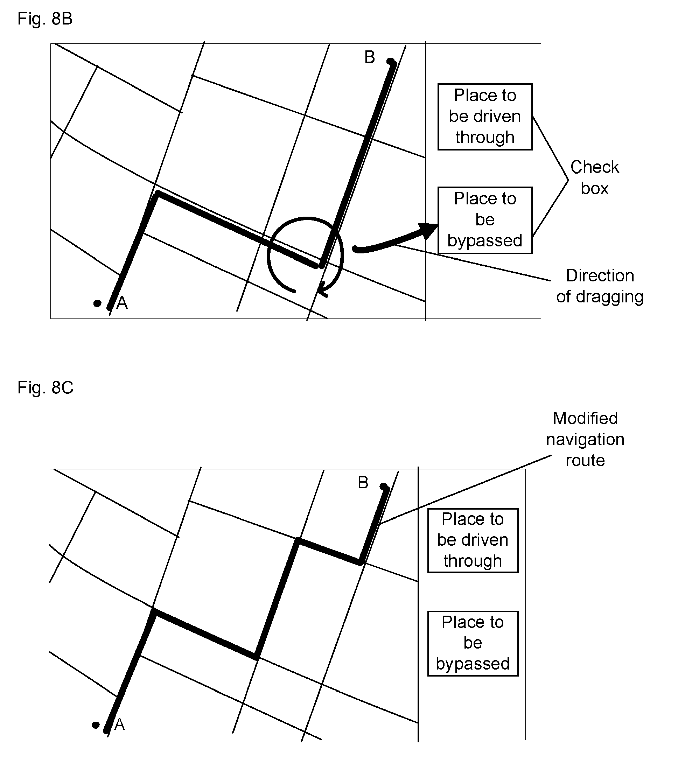

A fifth embodiment of a touch control method for an electronic map provided by the present disclosure is as shown in Figs. 7A, 7B and 7C, and the method includes:
step 701, an instruction for selecting a target area of an electronic map displayed on a display screen is received. The selection of the target area is as shown in Figs. 7A and 7B.
Step 702, a gesture touch-control instruction is received that is dragging a selected target area to a pop-up check box, and the dragging operation is as shown in Figs. 7B and 8B.

Fig. 7 shows a case in which the selected target area is taken as a place to be driven through, and Fig. 8 shows a case in which the selected area is taken as a place to be bypassed.
Step 703, a navigation route is modified according to content of the pop-up check box and the selected target area.

When the content of the check box is a place to be driven through, the navigation route is modified so that the selected target area is on a modified navigation route; when the content of the check box is a place to be bypassed, the navigation route is modified so that the selected target area is not on the modified navigation route. The result after modification of the navigation route is as shown in Figs. 7C and 8C.

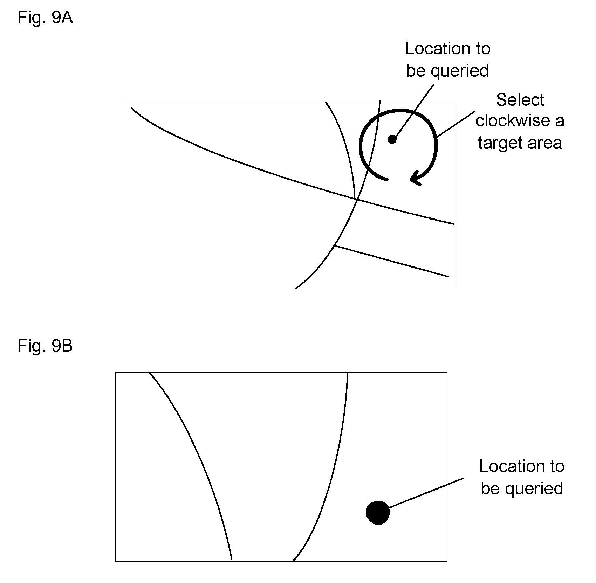

A second embodiment of another touch control method for an electronic map provided by the present disclosure is as shown in Figs. 9A, 9B and 9C, and the method includes:
step 901, an instruction for selecting a target area of an electronic map displayed on a display screen is received. The selection of the target area is as shown in Fig. 9A.
Step 902, when the direction of the selection is clockwise, the electronic map is magnified by taking the selected target area as a center of the display screen. The display effect after magnification is as shown in Fig. 9B.

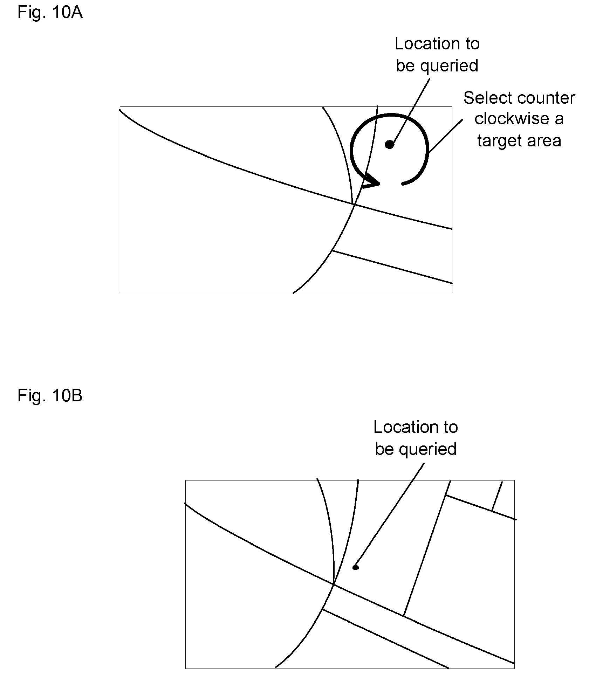

A third embodiment of another touch control method for an electronic map provided by the present disclosure is as shown in Figs. 10A, 10B and 10C, and the method includes:
step 1001, an instruction for selecting a target area of an electronic map displayed on a display screen is received. The selection of the target area is as shown in Fig. 10A.
Step 1002, when the direction of the selection is counter clockwise, the electronic map is de-magnified using a ratio between an average diameter of the selected target area and a length or width of the display screen as a scaling down ratio. The display effect after de-magnification is as shown in Fig. 10B.

To sum up, in the embodiments of the present disclosure, an instruction for selecting a target area of an electronic map displayed on a display screen is received, and an operation corresponding to a received gesture touch-control instruction is performed on a selected target area. When the received gesture touch-control instruction is zoom in, the electronic map is magnified by taking the selected target area as a center of the display screen, thereby avoiding cases that a location to be queried is beyond the display screen; when the received gesture touch-control instruction is zoom out, the electronic map is de-magnified using a ratio between an average diameter of the selected target area and a length or width of the display screen as a scaling down ratio, thereby avoiding cases that a location to be queried on the electronic map is too small to see due to excessive de-magnification; when the received gesture touch-control instruction is dragging the selected target area to a pop-up check box, a navigation route is modified according to content of the pop-up check box and the selected target area, thereby avoiding operations such as address input or coordinate dragging and dropping; Also, an instruction for selecting a target area of an electronic map displayed on a display screen is received, when the direction of the selection is clockwise, the electronic map is magnified by taking the selected target area as a center of the display screen, thereby not only avoiding cases that a location to be queried is beyond the display screen but also reducing operations of a user; and an instruction for selecting a target area of an electronic map displayed on a display screen is received, when the direction of the selection is counter clockwise, the electronic map is de-magnified using a ratio between an average diameter of the selected target area and a length or width of the display screen as a scaling down ratio, thereby not only avoiding cases that a location to be queried on the electronic map is too small to see due to excessive de-magnification but also reducing operations of a user. In this way, embodiments of the present disclosure can reduce touch-control operations of a user, save user's time and facilitate usage of the electronic map.

What described are merely preferable embodiments of the present disclosure, and are not intended to limit the present disclosure.

## Claims

1. A touch control method for an electronic map, the method comprising:
receiving an instruction for selecting a target area of an electronic map displayed on a display screen; and
performing an operation corresponding to a received gesture touch-control instruction on a selected target area.

2. The method according to claim 1, wherein the performing an operation corresponding to a received gesture touch-control instruction on a selected target area comprises:
when the received gesture touch-control instruction is zoom in, magnifying the electronic map by taking the selected target area as a center of the display screen; and
when the received gesture touch-control instruction is zoom out, de-magnifying the electronic map using a ratio between an average diameter of the selected target area and a length or width of the display screen as a scaling down ratio.

3. The method according to claim 1, wherein the performing an operation corresponding to a received gesture touch-control instruction on a selected target area comprises:
when the received gesture touch-control instruction is zoom in, magnifying the electronic map by taking the selected target area as a center of the display screen; and
when the received gesture touch-control instruction is zoom out, displaying original content displayed on the touch screen within the selected target area.

4. The method according to any one of claims 1, 2 or 3, wherein the gesture touch-control instruction is a selection made clockwise or counter clockwise.

5. The method according to claim 1, wherein the performing an operation corresponding to a received gesture touch-control instruction on a selected target area comprises:
when the received gesture touch-control instruction is dragging the selected target area to a pop-up check box, modifying a navigation route according to content of the pop-up check box and the selected target area.

6. A touch control method for an electronic map, the method comprising:
receiving an instruction for selecting a target area of an electronic map displayed on a display screen; and
performing a zoom in or zoom out operation on a selected target area according to a direction of the selection.

7. The method according to claim 6, wherein the performing a zoom in or zoom out operation on a selected target area according to a direction of the selection comprises:
when the direction of the selection is clockwise, magnifying the electronic map by taking the selected target area as a center of the display screen; and
when the direction of the selection is counter clockwise, de-magnifying the electronic map using a ratio between an average diameter of the selected target area and a length or width of the display screen as a scaling down ratio.

8. The method according to claim 6, wherein the performing a zoom in or zoom out operation on a selected target area according to a direction of the selection comprises:
when the direction of the selection is clockwise, magnifying the electronic map by taking the selected target area as a center of the display screen; and
when the direction of the selection is counter clockwise, displaying original content displayed on the touch screen within the selected target area.

9. A touch control device for an electronic map, the device comprising:
a selection instruction reception unit configured to receive an instruction for selecting a target area of an electronic map displayed on a display screen; and
an operation execution unit configured to perform an operation corresponding to a received gesture touch-control instruction on a selected target area.

10. The device according to claim 9, wherein the operation execution unit is configured to: when the received gesture touch-control instruction is zoom in, magnify the electronic map by taking the selected target area as a center of the display screen; and when the received gesture touch-control instruction is zoom out, de-magnify the electronic map using a ratio between an average diameter of the selected target area and a length or width of the display screen as a scaling down ratio.

11. The device according to claim 9, wherein the operation execution unit is configured to: when the received gesture touch-control instruction is zoom in, magnify the electronic map by taking the selected target area as a center of the display screen; and when the received gesture touch-control instruction is zoom out, display original content displayed on the touch screen within the selected target area.

12. The method according to claim 9, wherein the operation execution unit is configured to, when the received gesture touch-control instruction is dragging the selected target area to a pop-up check box, modify a navigation route according to content of the pop-up check box and the selected target area.

13. A touch control device for an electronic map, the device comprising:
a selection instruction reception unit configured to receive an instruction for selecting a target area of an electronic map displayed on a display screen; and
an operation processing unit configured to perform a zoom in or zoom out operation on a selected target area according to a direction of the selection.

14. The device according to claim 13, wherein the operation processing unit is configured to: when the direction of the selection is clockwise, magnify the electronic map by taking the selected target area as a center of the display screen; and
when the direction of the selection is counter clockwise, de-magnify the electronic map using a ratio between an average diameter of the selected target area and a length or width of the display screen as a scaling down ratio.

15. The device according to claim 13, wherein the operation processing unit is configured to: when the direction of the selection is clockwise, magnify the electronic map by taking the selected target area as a center of the display screen; and
when the direction of the selection is counter clockwise, display original content displayed on the touch screen within the selected target area.
